Europäisches Patentamt

(19) European Patent Office

Office européen des brevets

(11) **EP 0 733 912 A2**

(12) **EUROPEAN PATENT APPLICATION**

(43) Date of publication:
25.09.1996 Bulletin 1996/39

(51) Int. Cl.$^6$: **G01S 5/06**

(21) Application number: 96300445.2

(22) Date of filing: 23.01.1996

(84) Designated Contracting States:
DE FR GB SE

(30) Priority: 20.03.1995 US 407547

(71) Applicant: **GENERAL ELECTRIC COMPANY**
**Schenectady, NY 12345 (US)**

(72) Inventors:
• **Harrison, Daniel David**
**Delanson, New York 12053 (US)**

• **Brooksby, Glen William**
**Glenville, New York 12302 (US)**
• **Pradeep, Anantha Krishnan**
**Clifton Park, New York 12065 (US)**
• **Frey, Richard Louis**
**Delanson, New York 12053 (US)**

(74) Representative: **Goode, Ian Roy et al**
**GE London Patent Operation,**
**Essex House,**
**12/13 Essex Street**
**London WC2R 3AA (GB)**

(54) **Object location system**

(57) A system for determining location of an object within a defined area includes at least three object-locating receivers situated at predetermined locations about the area. A transmitter affixed to the object emits a signal which is received by the receivers such that at least two time difference of arrival (TDOA) values are determined between the receivers in each of at least two respective pairs of the receivers. Each of the TDOA values defines a respective curve such that the defined curves intersect. The intersection of the curves identifies the location of the object within the defined area. A time reference for determining each of the TDOA values may be obtained from global positioning system (GPS) receivers co-located with each of the object-locating receivers.

fig. 2

EP 0 733 912 A2

## Description

This invention relates to high accuracy object tracking systems and, more particularly, to an object tracking system in which a low power time difference of arrival (TDOA) technique is employed for determining the precise location of an object, such as a railcar, within a fixed or specific area, such as a railyard.

The tracking and location of assets such as railcars, shipping or cargo containers, motor vehicles such as trucks, truck trailers and automobiles, aircraft, ships, etc. can be highly advantageous in commerce. Precise tracking of such vehicles and objects can facilitate their being positioned in an efficient manner and also enable rapid location of lost, delayed or damaged assets.

It is particularly desirable to know the positions of railcars within a railyard in order to optimize their usage. Accurate automated real-time tracking of objects such as railcars can ease the burden of monitoring the progress of assembling and disassembling consists (trains) so as to ensure proper flow of the railcar assets. For example, knowledge of a railcar position to within a few feet is required in order to know with certainty what track is occupied by the railcar and the position of the railcar within the consist. However, this information must be obtained with minimal expenditure of energy at the railcar (or cargo container) because it is inconvenient to provide such asset with a source of substantial electrical energy.

The space-based global positioning system (GPS) is an object localization and tracking system that has been implemented by the United States Department of Defense and is available for general civilian use. However, this system does not provide the accuracy needed for the localized railyard or container tracking problem addressed by this invention. Furthermore, the GPS system requires that the object being tracked carry a GPS receiver. Because such receivers consume significant power, they are not suitable for meeting the low power consumption requirement addressed by this invention.

The patent literature describes a number of devices and systems which may be utilized to determine the position or other criteria regarding an object such as a railcar. For example, U.S. Patent No. 5,072,900 describes a system in which trains are equipped with an on-board device for detecting the position of the train with respect to the track and with a transmitter-receiver communicating with a central station. The central station utilizes the instantaneous storage of relative positions of all of the trains in the network, storage of the itineraries of each train, and the characteristics of the network related to the speed, range, and performance of the rolling stock. The central station transmits messages containing the identification numbers of the trains in circulation which are authorized to follow their route, taking into account position information received from these trains by the central station and of speed and range parameters contained in the storage. The device on board each train recognizes the identification number of the train with which it is associated and controls the stopping of the train in the absence of the identification number in the message which it receives from the central station. However, none of the prior art devices and systems disclose or suggest use of a TDOA system for locating and identifying a plurality of objects, such as railcars, in a specified region. Yet the TDOA system requires little energy when used in the tracking system of the invention since there is no need to receive low signal-to-noise ratio signals at the railcar and, additionally, low transmitter energy is needed because the range from a railcar transmitter to each of the receivers is small. The speed and precision of a TDOA system make it ideal for localized positioning applications.

## Summary of the Invention

An object of the invention is to provide a system which incorporates TDOA receiver and transmitter technology to achieve high-accuracy localized object tracking and positioning.

Another object is to provide a method and apparatus for accurately determining the location of objects within a fixed or defined location, such as a railyard, while expending little energy at each object to be located.

Briefly in accordance with a preferred embodiment of the invention, a system for determining the location of an object comprises a plurality of receivers situated at predetermined locations about a region being monitored. A transmitter affixed to at least one object whose location is to be determined when within the region transmits a signal to the plurality of receivers such that at least two TDOA values are determined between pairs of the receivers. Each of the TDOA values generates a substantially hyperbolic curve, with at least two such curves intersecting at a point that defines the position of the object.

In another preferred embodiment, a method for determining the location of an object within a specified region comprises placing a plurality of receivers at predetermined locations with respect to the region to be monitored; and transmitting a signal from the object to be located to the plurality of receivers, such that at least two TDOA values are determined. Each TDOA value specifies a hyperbola and the intersection point of two such hyperbolas identifies the position of the object.

The invention provides several advantages over prior art systems. First, relatively low power is required for the equipment mounted on the object whose position is to be tracked. Secondly, when this monitored area is a railyard, railcars can be located with sufficient accuracy to identify their specific track location and ordering in a consist. The invention further enables the receivers to be placed outside the railyard so that a monitoring entity can perform close railcar monitoring without being present in the railyard.

## Brief Description of the Drawings

The features of the invention believed to be novel are set forth in the appended claims. The invention, however, together with further objects and advantages thereof, may best be understood by reference to the following description taken in conjunction with the accompanying drawings in which:

Figure 1 is a block diagram mapping a simplified embodiment of the invention; and
Figure 2 is a block diagram mapping a more preferred embodiment of the invention in which a central station determines the time for transmission of a signal from an object to be located.

## Detailed Description

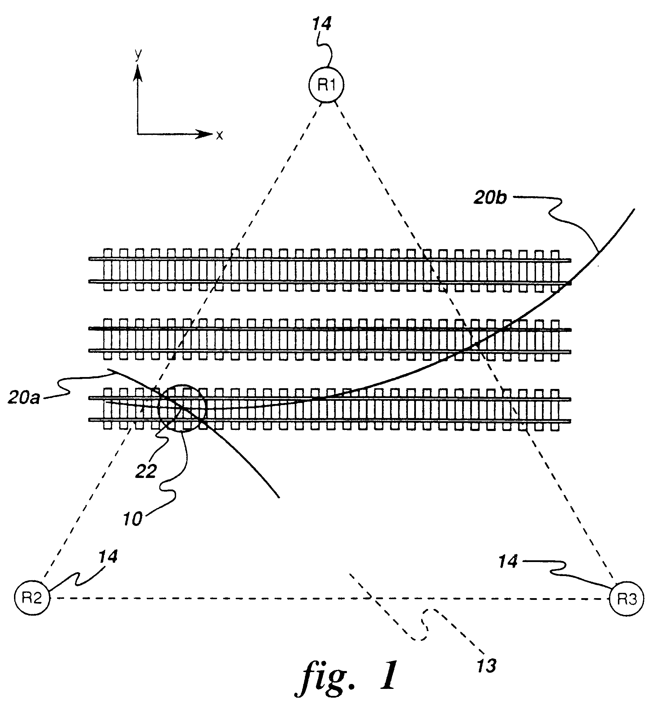

Figure 1 illustrates the location of a transmitter attached to an object 10 whose position is to be monitored or tracked, and a plurality of receivers R1, R2 and R3 (collectively designated 14) located at various known locations about, i.e., within or in proximity to, a region or area 13 to be surveilled. It is assumed, for purposes of this description, that region or area 13 is flat so that the localization problem is two-dimensional, thereby allowing use of fewer receivers 14 in the system.

Object 10, whose position is to be determined, is situated within region or area 13. For exemplary purposes, it is assumed that object 10 is a railcar and that region or area 13 is a railyard. It will be appreciated, however, that object 10 could comprise an automobile, plane, boat, cargo container, or other object to be located within a defined area.

In a preferred embodiment, the transmitter emits a short burst pseudo-random noise (PRN) signal and the receivers determine arrival time via cross correlation. In one embodiment, the carrier frequency may be selected to be within the 900 MHz industrial, scientific and medical (ISM) band, with a 10 MHz PRN code chipping rate.

The tracking system requires at least three different receiver sites, at which receivers R1, R2 and R3 are respectively situated, to perform a location analysis for railcar 10. The PRN signal emitted from a transmitter on railcar 10 is received by each of receivers 14. Receipt of the signal by receivers 14 results in generating signal arrival-time differentials. One signal arrival-time differential is the difference in arrival times of the PRN signal from railcar 10 at receivers R1 and R2, while another signal arrival time differential is the difference of arrival times of the same PRN signal at receivers R1 and R3. Each arrival-time differential yields a respective set of possible railcar locations that when plotted on a map of area 13 is a respective hyperbola 20a and 20b, each of which passes through the location of transmitting railcar 10 on the map. The intersection 22 of two such plotted hyperbolas, i.e., hyperbolas 20a and 20b, identifies the precise location of the transmitter on railcar 10.

In mathematical terms, let the arrival-time difference measured between any two receivers i and j be defined as $\Delta_{ij} = t^i{}_R - t^j{}_R$, where $t^i{}_R$ and $t^j{}_R$ are the PRN signal reception times at receivers i and j, respectively The following nonlinear equation set may then be used to determine the railcar (X,Y) coordinates:

$$r_2 - r_1 = C\Delta_{12} \qquad (1)$$

$$r_3 - r_1 = C\Delta_{13}$$

where C is the speed of light and $r_i$ is the range from receiver i to the railcar and is given by

$$r_i = [(X - X_i)^2 + (Y - Y_i)^2]^{1/2} \qquad (2)$$

To solve for a railcar location using equation (1), the individual arrival times differences, $\Delta_{12}$ and $\Delta_{13}$, must be measured. In a preferred embodiment, each respective one of receivers 14 includes an accurate local clock from which the respective arrival times $t^i{}_R$ and $t^j{}_R$ are locally determined. These times are then communicated to one central station (possibly one of the receiver sites), and their differences are calculated and used in equation (1) to determine the railcar location. The accurate local clocks may be derived from local GPS receivers included (i.e., co-located) with each of the PRN signal receivers 14. Relative accuracy of the local clocks is important, but absolute accuracy is not. Very accurate relative time accuracy is achievable between the clocks at receivers 14 by accurately measuring the relative positions of receivers 14 and then using standard Differential GPS methods that are well known to those skilled in the art. In an alternative embodiment, a single clock is generated at one central station and then distributed to receivers 14 with fixed, equalized distribution delays. The receiver clocks are then in relative synchronism and accurate arrival time differences are measured and utilized as described above. In yet another embodiment, the PRN signals are received by receivers 14 and then routed to a common site for correlation processing and time-difference calculation. The signal propagation delay from each receiver to the common site must then be known and taken into consideration when calculating railcar locations.

The PRN signal from the transmitter on railcar 10 is preferably generated with a time-bandwidth product extended sufficiently to allow for accurate arrival time determinations. This is preferably achieved by transmitting a carrier signal that is bi-phase modulated with a PRN sequence having a sufficient length and chipping (code-bit) rate. The autocorrelation function of such sequence is centralized, and provides for a high-accuracy arrival time determination. Furthermore, use of PRN sequence modulation protects against timing errors caused by multipath propagation.

Use of a 10 MHz chipping rate on a carrier in the 900 MHz ISM band allows a receiver cross-correlator to determine signal arrival time to within several nanoseconds, as is needed for localization accuracies of several feet. In an alternative embodiment, the transmitted signal may be in the form of an uncoded short carrier burst, such as is used in simple marine radar; however, this waveform would be more susceptible to multipath interference. Other waveforms are also possible. The waveform, transmitter, and receiver can be readily designed by one skilled in the art.

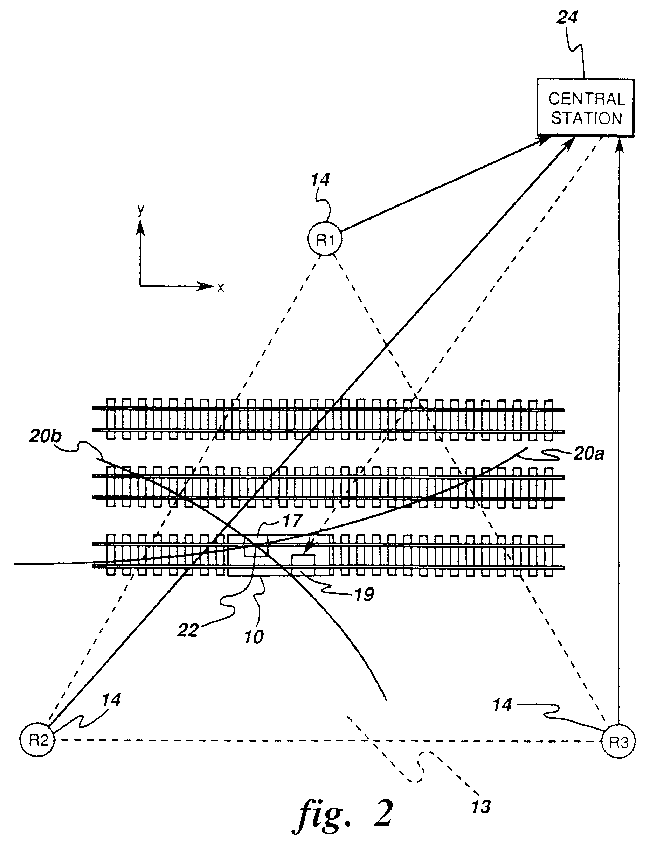

It is desirable to provide for simultaneously localizing a plurality of railcars in the railyard. This can be accomplished by organizing the various railcar transmissions so that mutual interference is avoided. In a preferred embodiment, as shown in FIG. 2, a local-area network is supported by a central station 24, and each railcar 10, carrying its PRN transmitter 17, joins the network while it is within railyard 13. To support network participation and command reception from central station 24, a receiver 19 may be carried on each railcar 10. Upon joining the network, each railcar 10 is assigned a unique identification code by the central station. All railcars periodically await reception of a transmission command from central station 24 and each subsequently transmits its respective localization waveform from its transmitter only if the command includes its unique code. To conserve electrical energy at each railcar, each respective railcar can participate in the network only periodically, for brief periods of time.

In an alternative embodiment, when railcar 10 is assigned its unique identification code by central station 24, a unique PRN sequence associated with this code is communicated to the railcar. In this embodiment, central station 24 receives data from receivers 14 and uses standard receiver cross-correlation methods to determine both the arrival time differences and the PRN sequence. From its assignment of PRN sequences to railcars, the central station can determine the railcar identity. Furthermore, by choosing the set of PRN sequences properly, their cross correlation values can be very small. Standard code-division multiple access (CDMA) receiver methods can then be used at the central station so that overlapping transmissions from the transmitters of different railcars do not interfere. Other network organizations may alternatively be used, as will be apparent to those skilled in the art.

While only certain preferred features of the invention have been illustrated and described, many modifications and changes will occur to those skilled in the art. It is, therefore, to be understood that the appended claims are intended to cover all such modifications and changes as fall within the true spirit of the invention.

## Claims

1. A system for determining location of an object within an area, comprising:

   a plurality of receivers situated at predetermined locations about said area;

   at least one object whose location is to be determined within said area; and

   a transmitter positioned at said object and adapted to emit short bursts of pulse encoded signal to said plurality of receivers such that a separate time difference of arrival (TDOA) value can be determined between the receivers in each of at least two pairs of said plurality of receivers, each of said TDOA values defining a respective curve such that the defined curves intersect, the intersection of said curves identifying the location of said object within said area.

2. The system of claim 1 including a standard global positioning system (GPS) receiver for establishing a single time reference for each of said plurality of receivers so as to enable determination of said TDOA values.

3. The system of claim 2 wherein said GPS receiver is co-located with one of said plurality of receivers.

4. The system of claim 2 wherein said GPS receiver is situated at a location spaced apart from each of said plurality of receivers.

5. The system of claim 1 including a standard global positioning system (GPS) receiver co-located with each respective one of said plurality of receivers for establishing a separate time reference for each respective one of said plurality of receivers so as to enable determination of said TDOA values.

6. A method for determining location of an object within an area, comprising:

   situating a plurality of receivers at predetermined locations in proximity to said area;

   positioning at said object a transmitter for transmitting a time difference of arrival (TDOA) determining signal to said plurality of receivers; and;

   transmitting a signal from said transmitter to at least three of said receivers such that at least two time difference of arrival (TDOA) values can be determined between two respective pairs of said receivers, each of said TDOA values defining a respective curve such that the defined curves intersect, the intersection of said curves identifying the location of said object within said area.

7. The method of claim 6 including the step of establishing a single time reference for each of said plurality of receivers so as to enable determination of said at least two TDOA values.

8. The method of claim 9 wherein the step of establishing a single time reference for each of said plurality of receivers comprises obtaining a time standard from a global positioning satellite receiver co-located with one of said plurality of receivers, and distributing said time standard to each one of said receivers with fixed, equalized distribution delays.

9. The method of claim 7 including the step of obtaining a separate time reference for each of said plurality of receivers from a separate respective global positioning system (GPS) receiver co-located with each respective one of said plurality of receiver so as to enable determination of said at least two TDOA values by Differential GPS techniques.

10. The method of claim 7 uncluding the steps of routing signals received by each of said plurality of receivers to a common receiver, said routing including the step of providing compensating delays for at least several of said signals being routed, and obtaining a time reference for each of said signals being routed from a global positioning system (GPS) receiver co-located with said common receiver.

11. The method of claim 7 wherein the step of transmitting a signal from said transmitter comprises transmitting a pseudo-random noise encoded signal.

12. A method for determining location of an object within an area, comprising:

situating a plurality of receivers at predetermined locations in proximity to said area;
positioning at said object a transmitter for transmitting uncoded short carrier bursts to said plurality of receivers; and
transmitting a signal from said transmitter to at least three of said receivers such that at least two TDOA values can be determined between two respective pairs of said receivers, each of said TDOA values defining a respective curve such that the defined curves intersect, the intersection of said curves identifying the location of said object within said area.

13. The method of claim 12 wherein the step of transmitting a signal from said transmitter to said at least three receivers comprises the step of including identification data for said object in said signal.

14. The system or method of any one of the preceding claims wherein said object whose location is to be determined comprises one of the group consisting of a railcar, a cargo container, a motor vehicle, a ship, and an aircraft.

15. A system for determining location of a railcar within a railyard, comprising:

at least three receivers situated at predetermined locations about said railyard;
a railcar whose location is to be determined within said railyard; and
a transmitter positioned upon said railcar and adapted to emit to said receivers short bursts of a carrier signal that is bi-phase modulated with a pseudo-random noise sequence such that a separate time difference of arrival (TDOA) value can be determined between the receivers in each of at least two pairs of said receivers, each of said TDOA values defining a respective hyperbola such that the defined hyperbolas intersect at a point identifying the location of the railcar.

16. The system of claim 15 including a standard global positioning system (GPS) receiver for establishing a clock reference signal to enable determination of said TDOA values.

17. The system of claim 15 further comprising a central station transmitter, and wherein said railcar includes a railcar receiver for receiving control signals for said transmitter positioned upon said railcar from said central station transmitter, said railcar receiver being adapted to control operation of said transmitter positioned upon said railcar.

*fig. 1*

*fig. 2*